# EUROPÄISCHE PATENTSCHRIFT

(11) **EP 2 595 885 B1**
(45) Veröffentlichungstag und Bekanntmachung des Hinweises auf die Patenterteilung: **25.06.2014**
(21) Anmeldenummer: 11734024.0
(22) Anmeldetag: 19.07.2011
(51) Int. Cl.: B64D 45/00, B64D 11/00

(54) **VERFAHREN UND SYSTEM ZUM ANZEIGEN VON INFORMATION AUF EINER ANZEIGEEINHEIT IN EINER FLUGZEUGKABINE**
METHOD AND DEVICE FOR DISPLAYING INFORMATIONS ON A DISPLAY IN AN AIRPLANE CABIN
MÉTHODE ET DISPOSITIF POUR L'AFFICHAGE D'INFORMATIONS SUR UN DISPOSITIF D'AFFICHAGE DANS UNE CABINE D'AVION

(30) Priorität: 20.07.2010 US 365851 P; 20.07.2010 DE 102010027709
(43) Veröffentlichungstag der Anmeldung: 29.05.2013
(73) Patentinhaber: Airbus Operations GmbH, 21129 Hamburg (DE)
(72) Erfinder: KOLLAKOWSKI, Malte, 21129 Hamburg (DE)
(74) Vertreter: Gunzelmann, Rainer
(86) Internationale Anmeldenummer: PCT/EP2011/003618
(87) Internationale Veröffentlichungsnummer: WO 2012/019695

(56) Entgegenhaltungen:
- DE-A1-102005 049 688
- DE-A1-102007 052 671
- US-A1- 2005 162 396

## Beschreibung

Die Erfindung betrifft ein Verfahren und ein System zum Anzeigen von Information auf einer Anzeigeeinheit in einer Flugzeugkabine.

In Flugzeugkabinen moderner Verkehrsflugzeuge gibt es eine Vielzahl von Beschriftungen, Hinweisschilder und Markierungen. Dabei handelt sich meist um bedruckte Schilder oder Aufkleber, die innerhalb der Flugzeugkabine angebracht bzw. aufgeklebt sind. So ist üblicherweise an den Passagiersitzen ein Hinweisschild mit dem englischen Schriftzug "Life vest under the seat" (Rettungsweste unter dem Sitz) angebracht. Des Weiteren ist üblicherweise an dem Gepäckfach über den Passagiersitzen ein Schild in englischer Sprache "Be careful when opening the overhead compartment" (Vorsicht beim Öffnen des Gepäckfachs über den Passagiersitzen) angebracht. Ferner wird durch Schließen der Toilettentür ein bei freier Toilette sichtbares Hinweisschild in englischer Sprache "Vacant" (Frei) durch ein Hinweisschild in englischer Sprache "Occupied" (Besetzt) ersetzt. Des Weiteren befinden sich in der Bordküche eine Vielzahl von Beschriftungen wie Hinweise betreffend eine Fixierung von Bordküchenelementen während des Starts und der Landung des Flugzeugs.

Darüber hinaus sind in der Bordküche eines Verkehrsflugzeugs üblicherweise Stellplätze vorgesehen, an denen fahrbare Transportbehälter, sogenannte "Trolleys", abgestellt werden können. Die Trolleys weisen einschieb- und herausziehbare Aufnahmevorrichtungen auf, die mit zur Vorsorgung der Passagiere an Bord des Flugzeugs benötigten Serviceprodukten, wie z.B. Nahrungsmitteln oder Getränken beladen sind. Ferner gibt es in Verkehrsflugzeugen oft Trolleys, deren Aufnahmevorrichtungen mit Produkten zum zollfreien Einkauf beladen sind. An den Trolleys sind maschinenlesbare Identifikationsmittel, sogenannte "Bar Codes", angebracht, welche die Trolleys bzw. die in den Trolleys befindliche Nahrungsmittel oder Produkte identifizieren.

Nachteilig bei den bekannten Hinweisschildern, Beschriftungen bzw. Bar Codes ist jedoch, dass die angezeigte Information nicht geändert werden kann. Zur Änderung der angezeigten Information muss das Hinweisschild bzw. der Bar Code durch ein neues Hinweisschild bzw. einen neuen Bar Code ersetzt werden. Eine solche Änderung kann notwendig sein, falls die in der jeweiligen Sprache angezeigte Information von dem Kabinenpersonal und/oder den Passagieren basierend auf deren Sprachkenntnissen nicht verstanden wird. Da Fluglinien aufgrund erhöhtem Kostendruck ihre Verkehrsflugzeuge bestmöglich auslasten müssen, kann es vorkommen, dass ein mit deutschen Hinweisschildern ausgestattetes Verkehrsflugzeug für einen bestimmten Zeitraum im Linienverkehr in Südamerika eingesetzt wird, so dass alle Hinweisschilder in der Flugzeugkabine für den bestimmten Zeitraum durch spanische Hinweisschilder ersetzt werden müssen. Dieser Austausch ist jedoch mit einem relative hohen zeitlichen und finanziellen Aufwand verbunden. Auch bei Trolleys kann sich der Bar Code ändern, so dass der Aufkleber mit dem aufgedruckten Bar Code mühsam von dem Trolley entfernt bzw. durch einen neuen Aufkleber ersetzt werden muss.

Die Druckschrift DE 10 2005 049 688 A1, welche als nächster Stand der Technik angesehen wird, offenbart ein RFID (Radio Frequency Identification)-System zur Überwachung der Transport- und Lagerbedingungen von in einem Trolley aufgenommenen Gütern. Der Trolley ist mit einem RFID-Transponder ausgestattet, der es Fluggesellschaften ermöglicht, den aktuellen Aufenthaltsort des Trolleys mittels geeignet aufgestellter Sende-Empfangs-Einheiten zu ermitteln. Befindet sich der Trolley in einem Stellplatz in der Bordküche eines Flugzeugs, so erfolgt eine Anzeige der von einem Lesegerät ausgelesenen Informationsdaten des RFID-Transponders über eine separat in der Bordküche installierte Anzeigeeinheit.

Der Erfindung liegt die Aufgabe zugrunde, ein Verfahren und ein System zum Anzeigen von Information auf einer elektrischen Anzeigeeinheit in einer Flugzeugkabine bereitzustellen, die eine flexible Anzeige von Information in der Flugzeugkabine ermöglichen.

Diese Aufgabe wird durch ein Verfahren zum Anzeigen von Information auf einer elektrischen Anzeigeeinheit in einer Flugzeugkabine mit den Merkmalen des Anspruchs 1 sowie einem System zum Anzeigen von Information auf einer elektrischen Anzeigeeinheit in einer Flugzeugkabine mit den Merkmalen des Anspruchs 8 gelöst.

Das erfindungsgemäße Verfahren zum Anzeigen von Information auf einer elektrischen Anzeigeeinheit in einer Flugzeugkabine weist die Verfahrensschritte Erzeugen mindestens eines die Information eindeutig identifizierenden Signals, Erfassen, insbesondere drahtloses Erfassen, des mindestens einen Signals, Steuern der Anzeigeeinheit basierend auf dem mindestens einen Signal und Anzeigen der Information auf der elektrischen Anzeigeeinheit auf. Bei der elektrischen Anzeigeeinheit kann es sich um jede Art von elektrischem Anzeigemittel handeln, welches eine Darstellung unterschiedlicher Information, beispielsweise verschiedener schriftlicher Information, ermöglicht. Vorzugsweise handelt es sich um eine auf organische Leuchtdioden (Organic Light Emitting Diode, OLED) basierende Anzeigevorrichtung, die auch bei hellem Umgebungslicht bzw. Dämmerlicht eine deutliche Anzeige gewährleistet. Ferner können auf OLED-Technologie basierende Anzeigeeinheiten auch biegbar bzw. flexibel ausgebildet sein, so dass die elektrische Anzeigeeinheit auf einfache Weise auf einer nicht ebenen Fläche angebracht werden kann. Bei der elektrischen Anzeigeeinheit kann es sich ferner um ein sogenanntes "elektrisches Papier" (ePaper) handeln, das auf dem Prinzip der Elektrophorese funktioniert. Bei der auf der elektrischen Anzeigeeinheit angezeigten Information kann es sich um jede Art von Information, wie Schriftzeichen, Symbole, Graphiken, Animationen oder Filme handeln. In einer bevorzugten Ausführungsform handelt es sich bei der angezeigten Information um einen aus Schriftzeichen bestehenden Satz. So können verschiedene bzw. mehrere die Information eindeutig identifizierende Signale erzeugt und anschließend erfasst werden. Bei dem die Information eindeutig identifizierenden Signal kann es sich um jede Art von technischem Signal handeln, welches für eine Kommunikation geeignet ist, wie beispielsweise ein elektrisches Signal, ein Funksignal, ein Lichtsignal und dergleichen. Insbesondere kann das erzeugte Signal drahtlos über eine Luftschnittstelle erfasst werden. In Abhängigkeit von dem erfassten Signal wird die elektrische Anzeigeeinheit zum Anzeigen der gewünschten Information gesteuert. Dadurch wird eine flexible, d.h. dynamisch und individuell veränderbare Anzeige von Information, insbesondere schriftlicher Information, auf der elektrischen Anzeigeeinheit ermöglicht. Folglich ist zum Ändern der angezeigten Information kein Austausch der Anzeigeeinheit notwendig.

In modernen Verkehrsflugzeugen werden Passagiere unterschiedlicher Nationalitäten bzw. Passagiere mit unterschiedlichen Sprachkenntnissen befördert. So gibt es Passagiere, die nur ihre Muttersprache sprechen und schriftliche Hinweise in einer anderen Sprache nicht verstehen. Dies kann jedoch gefährlich sein, insbesondere wenn es sich um Warnhinweise in Notfallsituationen des Flugzeugs, beispielsweise einen Hinweis auf einen Notausstieg bei einer Notlandung, handelt. Des Weiteren kommt es bei Interkontinentalflügen oft zu dem Problem, dass sich die an dem Ort des Startflughafens gesprochene Sprache von der an dem Ort des Zielflughafens gesprochenen Sprache unterscheidet. Ferner gibt es eine Reihe von Ländern, in denen mehrere Sprachen als Amtssprache gesprochen werden. Darüber hinaus werden zur bessern Auslastung von Verkehrsflugzeuge diese auf sich ständig wechselnden Flugrouten eingesetzt. So kann es vorkommen, dass ein Flugzeug in einem bestimmten Zeitraum zwischen Deutschland und den USA pendelt und anschließend nur innerhalb der Volksrepublik China eingesetzt wird, wodurch sich die Hauptsprachkenntnisse der Passagiere und Flugbegleiter ändern. In einem solchen Fall ist es notwendig, die Sprache der anzuzeigenden schriftlichen Information zu ändern bzw. an die vorwiegend von den Passagieren und Flugbegleitern gesprochenen Sprachen anzupassen. Zur Lösung dieses Problems kann schriftliche Information in verschiedenen Sprachen, insbesondere zwischen verschiedenen Sprachen alternierend angezeigt werden. So ist es beispielsweise möglich, dass die schriftliche Information abwechselnd zehn Sekunden nur in Deutsch und zehn Sekunden nur in Englisch angezeigt wird. Andere Anzeigezeitintervalle sind denkbar. Insbesondere können sich die Anzeigezeitintervalle für die jeweiligen Sprachen ändern, wie beispielsweise zehn Sekunden nur in Deutsch, zehn Sekunden nur in Englisch, acht Sekunden nur in Deutsch, acht Sekunden nur in Englisch, usw. Bei gleichzeitiger Anzeige der schriftlichen Information in mindestens zwei Sprachen können sich auch die Anzeigepositionen entsprechend den Zeitintervallen auf der Anzeigeeinheit ändern. Ein gleichzeitiges Anzeigen der schriftlichen Information in mehreren Sprachen und ein Anzeigen die schriftlichen Information in nur einer Sprache kann sich auch abwechseln, insbesondere mit unterschiedlichen Zeitintervallen. Durch die beschriebene Vorgehensweise besteht eine höhere Wahrscheinlichkeit, dass die angezeigte Information von den Passagieren bzw. den Flugbegleitern verstanden wird. Bei der abwechselnden Anzeige kann jede denkbare Darstellung verwendet werden. Beispielsweise kann eine nachfolgende Anzeige in einer anderen Sprache durch eine Überblendung oder mit Hilfe einer Laufschrift realisiert werden, so dass teilweise beide schriftlichen Informationen sichtbar sind. Es ist auch denkbar, dass die schriftlichen Informationen immer gleichzeitig in den verschiedenen Sprachen angezeigt werden. Eine abwechselnde Anzeige bietet sich immer dann an, wenn eine relativ kleine Anzeigeeinheit (beispielsweise eine Anzeigeeinheit für nur eine Schriftzeile) verwendet wird.

Um eine noch höhere Wahrscheinlichkeit zu ermöglichen, dass Passagiere bzw. Flugbegleiter angezeigte schriftliche Information verstehen, kann bei der Anzeige der schriftlichen Information Abflug- und/oder Ankunftsortinformation eines Fluges berücksichtigt werden. Bei der Abflug- und/oder Ankunftsortinformation kann es sich um jede einen Abflug- bzw. Ankunftsort eines Fluges betreffende Information, wie beispielsweise die an den Orten vorwiegend gesprochene Sprache handeln. So kann der Abflug- und/oder Ankunfts-Flughafen eines bevorstehenden Fluges erfasst bzw. berücksichtigt und die in dem Abflug- und Ankunfts-Flughafen gesprochene(n) Sprache(n) bei der Sprachauswahl für die Anzeige der schriftlichen Information verwendet werden. Das Erfassen der Abflug- und/oder Ankunftsortinformation kann automatisch durch ein in dem Flugzeug integriertes Computersystem erfolgen, beispielsweise nachdem von einem Piloten die Flugroute zur Navigation in das Computersystem eingegeben wurde. Es ist auch denkbar, dass das Erfassen der Abflug- und/oder Ankunftsortinformation von einem externen Computersystem erfolgt oder die Abflug- und/oder Ankunftsortinformation durch einen Flugbegleiter über eine Eingabevorrichtung (beispielsweise eine Tastatur) in das Computersystem eingegeben wird. Ferner ist es denkbar, dass eine anzuzeigende Information nur in einer ersten Sprache vorgesehen ist bzw. erfasst wird und ein Übersetzungsmodul (beispielsweise in dem Computersystem integriert) die Information in Abhängigkeit von der erfassten Information in eine zweite Sprache übersetzt. Anschließend kann die schriftliche Information abwechselnd zwischen der ersten Sprache und der zweiten Sprache angezeigt werden. Das Verfahren kann auch mehr als zwei Sprachen umfassen. Folglich kann das erfindungsgemäße Verfahren die Schritte Erfassen von Abflug- und/oder Ankunftsortinformation eines Fluges und Anzeigen der schriftlichen Informationen in Abhängigkeit von der erfassten Abflug- und/oder Ankunftsortinformation in verschiedenen Sprachen aufweisen.

Um die Anzeige der schriftlichen Information auf der elektrischen Anzeigeeinheit noch individueller an die Bedürfnisse der Passagiere anzupassen, kann das Verfahren ferner die Schritte Erfassen von Passagierinformation und Anzeigen der schriftlichen Information in Abhängigkeit von der erfassten Passagierinformation in verschiedenen Sprachen aufweisen. So kann es sich bei der erfassten Passagierinformation um eine Zuordnung zwischen einem Passagiersitz und einer Passagiernationalität und/oder einer Passagiersprache handeln. In Abhängigkeit von der Passagierinformation (d.h., der von einem Passagier gesprochenen Muttersprache) und einer weiteren Sprache (beispielsweise der Firmensprache der Fluglinie) kann die schriftliche Information angezeigt werden. Falls beispielsweise die Passagierinformation Daten umfasst, wonach ein auf einem bestimmten Passagiersitz eingecheckter Passagier von chinesischer Nationalität ist bzw. chinesisch als Muttersprache hat, so kann dem Passagier die schriftliche Information alternierend in der Hauptsprache Englisch und der Muttersprache Chinesisch angezeigt werden. Es ist auch möglich, dass für eine Auswahl einer zweiten Sprache neben einer Hauptsprache (z.B. der Hauptsprache der Fluglinie) eine Vielzahl von Passagierinformationen (insbesondere alle Passagierinformationen eines Fluges) ausgewertet werden und in Abhängigkeit von der Auswertung die zweite Sprache bestimmt wird. Ergibt beispielsweise die Verarbeitung bzw. Auswertung der Passagierinformationen aller für einen Flug eingecheckter Passagiere, dass 90% der Passagiere Chinesen, 5% der Passagiere Deutsche und 5% der Passagiere Amerikaner sind, so kann die schriftliche Information neben der Hauptsprache der Fluglinie Englisch zusätzlich in Chinesisch angezeigt werden. Befinden sich jedoch beispielsweise 80% Italiener in dem Flugzeug, so kann die zweite Sprache Italienisch sein. Bei der Passagierinformation kann es sich ferner um Information handeln, die von der Fluggesellschaft beim Check-In erfasst wurde. Alternativ oder zusätzlich kann es sich auch um Information handeln, die der Fluggesellschaft aufgrund einer anderen Dienstleistung bekannt ist. Beispielsweise kann für die Passagierinformation eine Sprache verwendet werden, die ein Passagier beim Zugriff über das Internet auf ein Flugticketbuchungssystem oder ein Vielfliegerprogramm der Fluglinie verwendet hat. Die erfasste Passagierinformation kann über einen Datenspeicher, eine drahtlose oder eine drahtgebundene Verbindung in das System der vorliegenden Erfindung eingespeist werden. Falls gewünscht kann auch ein Flugbegleiter die Passagierinformation manuell, beispielsweise über ein Eingabeterminal, in das System eingeben.
In einer bevorzugten Ausführungsform ist die Anzeigeeinheit an einem Passagiersitz angebracht und die schriftliche Information wird in Abhängigkeit von der erfassten Passagierinformation eines dem Passagiersitz zugeordneten Passagiers in verschiedenen Sprachen angezeigt. Die Anzeigeeinheit kann grundsätzlich an jeder beliebigen Position an dem Passagiersitz angebracht sein. Falls beispielsweise die erfasste Passagierinformation Daten umfasst, wonach auf dem Passagiersitz 22C ein Passagier brasilianischer Nationalität sitzt oder auf dem Passagiersitz 22C ein Passagier sitzt, der seinen Flug auf der Internet-Seite der Fluglinie in portugiesischer Sprache gebucht hat, so zeigt die Anzeigeeinheit abwechselnd in Englisch und Portugiesisch an, dass sich die Schwimmweste unter dem Passagiersitz befindet.

Falls gewünscht kann eine Anzeigezeitdauer der schriftlichen Information in der jeweiligen Sprache in Abhängigkeit von der erfassten Information gesteuert werden. Umfasst die erfasste Information beispielsweise Daten, wonach es sich um einen innerarabischen Flug zwischen zwei arabischen Städten handelt, so kann die schriftliche Information länger auf arabisch als auf Englisch angezeigt werden. Insbesondere kann das Zeitintervall während dem die schriftliche Information in einer ersten Sprache angezeigt wird größer (insbesondere zwei-, drei- oder viermal größer) als das Zeitintervall sein, während dem die schriftliche Information in einer zweiten Sprache angezeigt wird. Dazu kann in Abhängigkeit von der erfassten Information bestimmt werden, dass die erste Sprache für den Passagier wichtiger als die zweite Sprache ist. So kann die schriftliche Information beispielsweise abwechselnd zehn Sekunden nur auf Arabisch und fünf Sekunden nur auf Englisch angezeigt werden. Andere Zeitintervalle, insbesondere sich ändernde Zeitintervalle, sind denkbar. In Abhängigkeit von der erfassten Information können den Sprachen ferner Prioritäten zugeordnet werden. Je höher die der Sprache zugeordneten Priorität ist, desto länger wird die schriftliche Information in der jeweiligen Sprache angezeigt.

In einer weiter bevorzugten Ausführungsform ist die elektrische Anzeigeeinheit außen an einem Transportbehälter, beispielsweise einem Trolley, angebracht. Bei dieser Ausführungsform kann das mindestens eine die Information eindeutig identifizierende Signal durch einen Transponder erzeugt werden, der an einer Aufnahmevorrichtung, beispielsweise einem Tablett, in dem Transportbehälter angebracht ist. Bei dem Transponder kann es sich insbesondere um einen RFID-Sender handeln. Das erzeugte Signal kann drahtlos von einem Lesegerät erfasst werden, welches in dem Transportbehälter angebracht ist. Entsprechend kann die Anzeigeeinheit, die außen an dem Transportbehälter angebracht ist, die Information anzeigen. Befindet sich eine Aufnahmevorrichtung in dem Transportbehälter, so wird dieser Zustand außen auf der Anzeigeeinheit angezeigt. Entsprechend wird eine Herausnahme einer Ausnahmevorrichtung aus dem Transportbehälter in Echtzeit auf der Anzeigeeinheit angezeigt. Folglich zeigt die Anzeigeeinheit ständig aktuell den Beladungszustand des Transportbehälters an. Aus diesem Grund besteht für das Kabinenpersonal keine Notwendigkeit, den Transportbehälter zu öffnen, um zu überprüfen, welche Nahrungsmittel bzw. Produkte sich in dem Transportbehälter befinden. Dies ist insbesondere dann von Vorteil, wenn in dem Transportbehälter Nahrungsmittel gekühlt bzw. erwärmt werden, so dass unnötiges Öffnen der Tür des Transportbehälters vermieden wird. Folglich entweicht weniger Kälte bzw. Wärme in den Flugzeugkabineninnenraum.

Das erfindungsgemäße System zum Anzeigen von Information auf einer elektrischen Anzeigeeinheit in einer Flugzeugkabine weist auf eine elektrische Anzeigeeinheit, die dazu eingerichtet, die Information anzuzeigen, eine Erzeugungseinheit, die dazu eingerichtet ist, mindestens ein die Information eindeutig identifizierendes Signal zu erzeugen, eine erste Erfassungseinheit, die dazu eingerichtet ist, das mindestens eine Signal zu erfassen (insbesondere drahtlos) und eine Steuerungseinheit, die dazu eingerichtet ist, die Anzeigeeinheit basierend auf dem mindestens einen Signal zu steuern.

Bei der Erzeugungseinheit kann es sich um jede Art von Signalerzeugungseinheit wie einen RFID-Transponder, einen Funksender (z.B. Wireless Local Area Network (WLAN), Bluetooth, ZigBee, usw.) handeln, die ein technisches Signal erzeugen kann, welches insbesondere drahtlos übertragbar ist. Entsprechend kann es sich bei der ersten Erfassungseinheit um einen Empfänger, beispielsweise ein Lesegerät oder einen Funkempfänger handeln, der dazu eingerichtet ist, das Signal insbesondere drahtlos zu erfassen. Eine kabelgebundene Übertragung zwischen der Erzeugungseinheit und der ersten Erfassungseinheit ist ebenfalls denkbar. Bei der Steuerungseinheit kann es sich um jede Art von Steuerung, wie beispielsweise einen Mikroprozessor handeln, die mit der ersten Erfassungseinheit und der Anzeigeeinheit in Verbindung steht und basierend auf dem erfassten Signal die Anzeigeeinheit steuert. Ferner können die erste Erfassungseinheit, die Steuerungseinheit und die elektrische Anzeigeeinheit integral, d.h. in einem Modul, ausgebildet sein. Insbesondere können die erste Erfassungseinheit und die Steuerungseinheit in der Anzeigeeinheit integriert sein.

Die Steuerungseinheit kann ferner dazu eingerichtet sein, die Anzeigeeinheit derart zu steuern, dass diese schriftliche Information in verschiedenen Sprachen, insbesondere zwischen verschiedenen Sprachen alternierend, anzeigt. Dazu kann die Steuerungseinheit über die erste Erfassungseinheit von der Erzeugungseinheit mindestens ein entsprechendes Signal empfangen. Es ist auch denkbar, dass die Steuerungseinheit basierend auf dem erfassten Signal das Signal verarbeitet und basierend auf dem Ergebnis der Verarbeitung die Anzeigeeinheit zur Anzeige der schriftlichen Information in verschiedenen Sprachen ansteuert. So kann beispielsweise der Steuerungseinheit über die erste Erfassungseinheit durch die Erzeugungseinheit signalisiert werden, dass die schriftliche Information "Schwimmweste unter dem Passagiersitz" in Englisch und Deutsch angezeigt werden soll. Es ist auch möglich, dass die Erzeugungseinheit über die erste Erfassungseinheit der Steuerungseinheit signalisiert, dass die schriftliche Information "Schwimmweste unter dem Sitz" auf der Anzeigeeinheit angezeigt werden soll, wobei diese schriftliche Information zusätzlich in Englisch angezeigt werden soll. Entsprechend kann die Steuerungseinheit die deutsche schriftliche Information ins Englische übersetzen (beispielsweise durch ein Übersetzungsmodul basierend auf einer Datenbank) und anschließend abwechselnd die schriftliche Information in Deutsch und Englisch auf der Anzeigeeinheit anzeigen. Ein entsprechendes Übersetzungsmodul kann auch in der Erzeugungseinheit integriert sein.

Das System kann ferner eine zweite Erfassungseinheit zum Erfassen vom Abflugund/oder Ankunftsortinformation eines Flugs aufweisen, wobei die zweite Erfassungseinheit dazu eingerichtet ist, in Abhängigkeit von der erfassten Abflugund/oder Ankunftsortinformation mindestens ein die schriftliche Information in verschiedenen Sprachen eindeutig identifizierendes Signal zu erzeugen. Bei der zweiten Erfassungseinheit kann es sich um jede Art von Datenempfänger, Datenspeicher und/oder Datenquelle handeln, die für eine Datenerfassung einsetzbar ist. Beispielsweise kann es sich um einen Computer mit einem angeschlossenen Speichermedium handeln, der die Abflug und/oder Ankunftsortinformation eines Fluges über einen drahtlose oder drahtgebundene Verbindung, oder eine Eingabeeinheit erhält.

Das System kann ferner eine dritte Erfassungseinheit zum Erfassen von Passagierinformation aufweisen, wobei die dritte Erfassungseinheit dazu eingerichtet ist, in Abhängigkeit von der erfassten Passagierinformation mindestens ein die schriftliche Information in verschiedenen Sprachen eindeutig identifizierendes Signal zu erzeugen. Die dritte Erfassungseinheit kann wie die zweite Erfassungseinheit ausgebildet sein. Insbesondere können die zweite und die dritte Erfassungseinheit in einer Einheit integriert sein oder eine Einheit bilden.

Gemäß einer bevorzugten Ausführungsform ist die Anzeigeeinheit an einen Passagiersitz angebracht sein, wobei die erfasste Passagierinformation eine Zuordnung zwischen einem Passagiersitz und einer Passagiernationalität und/oder einer Passagiersprache umfasst. Diese Zuordnung kann insbesondere durch einen Datensatz in einer Datenbank erfolgen. Alternativ kann die Anzeigeeinheit auch einem Passagiersitz zugeordnet sein, beispielsweise an der Deckenverkleidung über einem Passagiersitz angebracht.

Ferner kann die Erzeugungseinheit dazu eingerichtet sein, in Abhängigkeit von der erfassten Information ein Zeitsteuersignal zu erzeugen, welches eine Anzeigezeitdauer der schriftlichen Information in der jeweiligen Sprache auf der Anzeigeeinheit umfasst. Alternativ oder zusätzlich kann das Zeitsteuerungssignal auch von der Steuerungseinheit basierend auf der erfassten Information erzeugt werden.

Des Weiteren kann das System einen Transportbehälter mit mindestens einer Aufnahmevorrichtung aufweisen, wobei die Erzeugungseinheit ein Transponder ist, der an der Aufnahmevorrichtung in dem Transportbehälterbehälter angebracht ist, die erste Erfassungseinheit ein Lesegerät ist, das in dem Transportbehälter angebracht ist und das mindestens eine Signal drahtlos erfasst, und die Anzeigeeinheit außen an dem Transportbehälter angebracht ist.

Insbesondere betrifft die vorliegende Erfindung einen Transportbehälter mit einem erfindungsgemäßen System zum Anzeigen von Information auf einer elektrischen Anzeigeeinheit. Vorzugsweise handelt es sich bei dem Transportbehälter um einen fahrbaren Trolley.

Gemäß einer weiteren Ausführungsform kann an der Anzeigeeinheit mindestens eine Taste vorgesehen sein, mit deren Hilfe verschiedene Betriebsmodi ausgewählt werden können. So ist es denkbar, dass durch Betätigung der Taste von einem alternierenden Anzeigemodus in einen Anzeigemodus mit nur einer Sprache gewechselt wird. Bevorzugt wird die schriftliche Information in der Sprache fortlaufend bzw. mit einem längeren Zeitintervall angezeigt, in der bei Tastenbetätigung die schriftliche Information angezeigt wurde.

Bevorzugte Ausführungsformen der Erfindung werden nun anhand der beigefügten schematischen Zeichnungen näher erläutert, von denen
- Figur 1: eine Ansicht einer Ausführungsform eines Systems zum Anzeigen von Information auf einer elektrischen Anzeigeeinheit in einer Flugzeugkabine in einem ersten Betriebsmodus zeigt,
- Figur 2: eine Ansicht der Ausführungsform der Figur 1 in einem zweiten Betriebsmodus zeigt,
- Figur 3: eine Frontansicht einer Ausführungsform eines Trolley mit einem System zum Anzeigen von Information auf einer elektrischen Anzeigeeinheit zeigt,
- Figur 4: eine Frontansicht des Trolleys der Figur 3 bei geschlossener Tür zeigt und
- Figur 5: eine Frontansicht des Trolleys der Figuren 4 und 5 mit einer entnommenen Aufnahmevorrichtung zeigt.

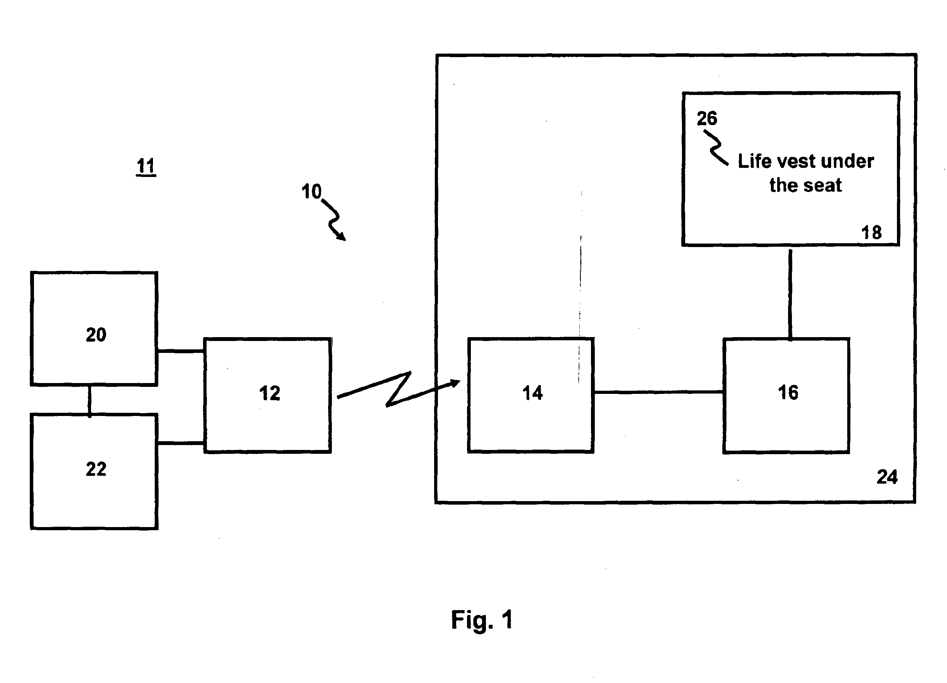

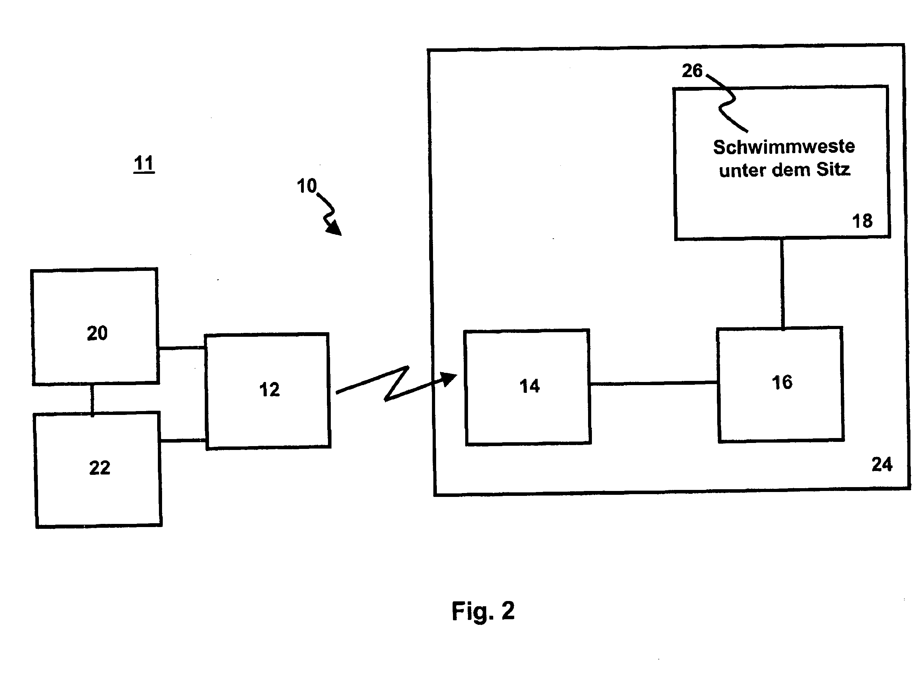

Eine in den Figuren 1 und 2 veranschaulichte Ausführungsform eines Systems 10 zum Anzeigen von Information auf einer elektrischen Anzeigeeinheit in einer Flugzeugkabine 11 umfasst eine Erzeugungseinheit 12 zum Erzeugen mindestens eines die anzuzeigende Information eindeutig identifizierendes Signals, eine erste Erfassungseinheit 14 zum drahtlosen Erfassen des mindestens einen Signals, und eine Steuerungseinheit 16 zum Steuern einer Anzeigeeinheit 18 basierend auf dem erfassten mindestens einen Signal. Ferner kann das System 10 eine zweite Erfassungseinheit 20 zum Erfassen von Abflug- und Ankunftsortinformation eines Flugs und eine dritte Erfassungseinheit 22 zum Erfassen von Passagierinformation aufweisen. Die erste Erfassungseinheit 14, die Steuerungseinheit 16 und die Anzeigeeinheit 18 können in einem Modul 24 integriert sein.

Vorzugsweise wird auf der Anzeigeeinheit 18 eine schriftliche Information 26 angezeigt. Bei der Anzeigeeinheit 18 handelt es um ein OLED-Display, das auch bei hellen Lichtverhältnissen eine gut lesbare Anzeige der schriftlichen Information 26 ermöglicht. Bei der Anzeigeeinheit 18 kann es sich auch um jede andere Art von elektrischer Anzeigeeinheit, wie beispielsweise einem Liquid Crystal Display (LCD) handeln. Die Anzeigeeinheit 18 wird von der Steuerungseinheit 16 gesteuert. Bei der Steuerungseinheit 16 handelt es sich um einen Mikroprozessor, der die Anzeige der schriftlichen Information 26 auf der Anzeigeeinheit 18 steuert. Die Steuerungseinheit 16 kann auch in der Anzeigeeinheit 18 integriert sein. Zur Steuerung der Anzeigeeinheit 18 erhält die Steuerungseinheit 16 Daten von der ersten Erfassungseinheit 14, basierend auf denen die Steuerungseinheit 16 die Anzeigeeinheit 18 ansteuert.

In der vorliegenden Ausführungsform handelt es sich bei der ersten Erfassungseinheit 14 um einen WLAN-Empfänger. Entsprechend handelt es sich bei der Erzeugungseinheit 13 um einen WLAN-Sender. Die vorliegende Erfindung ist jedoch nicht auf WLAN Technologie beschränkt, so kann grundsätzlich jede Funktechnologie (wie z.B. Bluetooth, ZigBee, usw.) verwendet werden, die eine drahtlose Datenübertragung zwischen der Erzeugungseinheit 12 und der erste Erfassungseinheit 14 ermöglicht. Da das System 10 in einem Flugzeug eingesetzt wird, wird bevorzugt eine Funktechnologie mit geringeren Sendeleistungen verwendet, so dass elektrische Instrumente des Flugzeugs nicht beeinflusst werden. Falls gewünscht kann zwischen der Erzeugungseinheit 12 und der ersten Erfassungseinheit 14 eine bidirektionale Datenkommunikation stattfinden. Es ist auch denkbar, dass die Kommunikation zwischen der Erzeugungseinheit 12 und der ersten Erfassungseinheit 14 drahtgebunden realisiert ist. Ferner kann die Erzeugungseinheit 12 auch mit einer Vielzahl von ersten Erfassungseinheiten (nicht gezeigt) in Verbindung stehen. Darüber hinaus ist es denkbar, dass die erste Erfassungseinheit 14 von der Erzeugungseinheit 12 empfangene Signale bzw. Daten an mindestens eine weitere erste Erfassungseinheit (nicht gezeigt) sendet. So kann die erste Erfassungseinheit 14 zusätzlich als ein Repeater verwendet werden, wodurch hohe Sendeleistungen in dem Flugzeug zum Überbrücken großer Distanzen zwischen Sender 12 und Empfänger 14 vermieden werden können.

Die zweite Erfassungseinheit 20 und die dritte Erfassungseinheit 22 sind mit der Erzeugungseinheit 12 verbunden. Optional sind die zweite Erfassungseinheit 20 und die dritte Erfassungseinheit 22 miteinander verbunden. Bei der zweiten und der dritten Erfassungseinheit 20, 22, kann es sich um jede Art von Datenquelle (wie z.B. ein Datenspeicher, eine Eingabeeinheit, eine Netzwerkverbindung (beispielsweise mit dem Internet), eine Verbindung mit einem Computersystem (wie beispielsweise einem Bordcomputer), usw.) handeln. Insbesondere können die zweite und die dritte Erfassungseinheit 20, 22 in einer Einheit integriert sein.

Die Anzeigeeinheit 18 ist an einem Passagiersitz (nicht gezeigt) angebracht. Falls gewünscht kann das Modul 24 umfassend die erste Erfassungseinheit 14, die Steuerungseinheit 16 und die Anzeigeeinheit 18 an dem Passagiersitz angebracht sein. Vorzugsweise ist die Anzeigeeinheit 18 derart an dem Passagiersitz, dass ein Passagier sie lesen kann, wenn er sich auf dem Passagiersitz befindet. Die Anzeigeeinheit 18 kann jedoch auch an jeder anderen Stelle in der Flugzeugkabine, wie beispielsweise an der Kabinendecke, an der Kabinenwand, auf dem Boden, in einer Bordküche, an einem Trolley oder an einer Tür angebracht sein. Falls die OLED-Anzeigeeinheit 18 flexibel ausgebildet ist, so kann sie auf einfache Weise an einer nicht ebenen Fläche angebracht werden. Bei Auflage der OLED-Anzeigeeinheit 18 auf der nicht ebenen Fläche kann zusätzlich Platz eingespart werden. Des Weiteren sind die Erzeugungseinheit 12, die zweite Erfassungseinheit 20 und die dritte Erfassungseinheit 22 an einem Ort getrennt von dem Passagiersitz in dem Flugzeug vorgesehen.

Ein Ausführungsbeispiel eines Verfahrens zum Anzeigen von schriftlicher Information auf der Anzeigeeinheit 18 wird nun unter Bezugnahme auf die Figuren 1 und 2 erläutert. In diesem Ausführungsbeispiel erfasst die zweite Erfassungseinheit 20, dass der Abflugort eines bevorstehenden Flugs Hamburg und der Ankunftsort New York ist. Diese Information erhält die zweite Erfassungseinheit 20 aus dem Bordcomputer des Flugzeugs (nicht gezeigt), mit dem die zweite Erfassungseinheit 20 in Verbindung steht. Anschließend sendet die zweite Erfassungseinheit 20 die Abflug- und Ankunftsortinformation Hamburg und New York an den WLAN-Sender 12. Der WLAN-Sender 12 erzeugt ein der Abflug- und Ankunftsortinformation entsprechendes Signal und sendet dieses über eine Luftschnittstelle an den WLAN-Empfänger 14. Das von dem WLAN-Empfänger 14 empfangene Signal wird an die Steuerungseinheit 16 weitergeleitet, welche in Abhängigkeit von dem Signal die Anzeigeeinheit 18 derart steuert, dass auf dieser abwechselnd die schriftliche Information 26 "Life vest under the seat" (siehe Figur 1) und "Schwimmweste unter dem Sitz" (siehe Figur 2) angezeigt wird. Es ist ferner denkbar, dass zur abwechselnden Anzeige der beiden schriftlichen Informationen 26 eine Mehrzahl von Signalen erzeugt und gesendet werden. Ferner kann die zweite Erfassungseinheit 20 oder die Steuerungseinheit 16 der Abflug- und der Ankunftsortinformation jeweils eine dem Ort entsprechende Sprache zuordnen. Diese Information kann aus einer Datenbank erlangt werden. So können dem Abflugort Hamburg die Sprache Deutsch und dem Ankunftsort New York die Sprache Englisch zugeordnet werden. In diesem Fall kann das von dem WLAN-Sender 12 gesendete Signal nur die Sprachinformation Deutsch und Englisch und nicht die Information Hamburg und New York enthalten.

Wird durch die zweite Erfassungseinheit 20 anschließend für einen weiteren bevorstehenden Flug erfasst, dass es sich bei dem Startflughafen um New York und bei dem Ankunftsflughafen um Peking handelt, so wird ein entsprechendes Signal von der zweiten Erfassungseinheit über den WLAN-Sender 12 und den WLAN-Empfänger 14 an die Steuerungseinheit 16 gesendet. Entsprechend steuert die Steuerungseinheit 16 die Anzeigeeinheit 18 derart, dass die schriftliche Information 26 abwechselnd in Englisch und Chinesisch angezeigt wird. Folglich wird eine höhere Wahrscheinlichkeit erreicht, dass Passagiere und Flugbegleiter die auf der Anzeigeeinheit 18 angezeigte schriftliche Information 26 verstehen. Dies ist insbesondere dann von hoher Wichtigkeit, wenn die Anzeigeeinheit 18 Sicherheitsinformation, wie die in den Figuren 1 und 2 gezeigte Information hinsichtlich der Schwimmweste oder bezüglich eines Notausstiegs, anzeigt. Gemäß einer Weiterbildung kann die schriftliche Information 26 ausschließlich in einer Notfallsituation zwischen verschiedenen Sprachen alternierend angezeigt werden.

Damit Passagiere die schriftliche Information 26 mit einer noch höheren Wahrscheinlichkeit verstehen, kann die dritte Erfassungseinheit 22 Passagierinformation erfassen. Die dritte Erfassungseinheit 22 kann wie die zweite Erfassungseinheit 20 ausgebildet sein. Bei der Passagierinformation kann es sich um eine eindeutige Zuordnung zwischen einem Passagiersitz und einer Passagiernationalität und/oder einer Passagiersprache handelt. Die Passagierinformation kann der dritten Erfassungseinheit 22 durch eine flugzeugexterne Einheit (beispielsweise ein Computersystem) zugeführt werden. In diesem Fall kann es sich bei der dritten Erfassungseinheit 22 um einen Datenspeicher bzw. eine Datenbank handeln. Es ist auch denkbar, dass es sich bei der dritten Erfassungseinheit 22 um einen Empfänger (beispielsweise einen drahtlosen Empfänger) handelt, der mit einem externen Sender (nicht gezeigt) verbunden ist. Ein der Passagierinformation entsprechendes Signal wird von dem WLAN-Sender 12 über den WLAN-Empfänger 14 an die Steuerungseinheit 16 gesendet. Beispielsweise ist die Anzeigeeinheit 18 an dem Passagiersitz 22C angebracht und die Passagierinformation umfasst, dass der auf dem Passagiersitz 22C eingecheckte Passagier von chinesischer Nationalität ist. Ferner umfasst die von der zweiten Erfassungseinheit 20 erfasste Abflug- und Ankunftsortinformation, dass der Flug von New York nach Peking geht. In diesem Fall steuert die Steuerungseinheit 16 nach Empfang der Signale von der zweiten und dritten Erfassungseinheit 20, 22 die Anzeigeeinheit 18 derart, das die schriftliche Information 26 abwechselnd auf Englisch und Chinesisch angezeigt wird. Da der auf dem Passagiersitz 22C eingecheckte Passagier von chinesischer Nationalität ist, besteht eine hohe Wahrscheinlichkeit, dass er besser Chinesisch als Englisch versteht. Entsprechend kann die Steuerungseinheit 26 die Anzeigeeinheit 18 derart ansteuern, dass die schriftliche Information 26 länger in Chinesisch als in Englisch angezeigt wird. Beispielsweise wird die schriftliche Information 26 zehn Sekunden auf Chinesisch und fünf Sekunden auf Englisch angezeigt. Durch diese Individualisierung der Anzeige erhält der Passagier eine höhere Wertschätzung. Insbesondere kann die Passagierinformation den Namen des Passagiers enthalten und zusätzlich oder alternativ der Name des Passagiers auf der Anzeigeeinheit 18 angezeigt werden. Entsprechend können abwechselnd verschiedene Schreibweisen des Namens angezeigt werden, beispielsweise der Name in lateinischen und chinesischen Schriftzeichen.

Die Intelligenz zur Entscheidung der anzuzeigenden Sprachen und/oder der Anzeigezeitdauer kann in jeder der Einheiten 12, 14, 16, 18, 20 und 22 integriert sein. So kann die Steuerungseinheit 16 sämtliche empfangenen Daten bzw. Signale auswerten und basierend auf dieser Auswertung die Anzeigeeinheit 18 steuern. Ferner können auch die Einheiten 12, 20 und/oder 22 die Daten auswerten und ein entsprechendes Signal an die Steuerungseinheit 16 senden, so dass die Steuerungseinheit 16 nur Befehle zum Anzeigen der schriftlichen Information 26 auf der Anzeigeeinheit 18 ausführt.

Gemäß einer Weiterbildung der vorangegangenen Ausführungsformen kann an jedem der in der Flugzeugkabine eingebauten Passagiersitze eine Anzeigeeinheit 18 bzw. ein Modul 24 angebracht sein. Entsprechend kann der WLAN-Sender 12 an jedes der Mehrzahl von Modulen Steuerungssignale zum individuellen Ansteuern jeder der Mehrzahl von Anzeigeeinheiten 18 senden. Es ist ferner denkbar, dass der WLAN-Sender 12 Signale an eine Vielzahl von an verschiedenen Stellen in der Flugzeugkabine angebrachte Module 24 sendet.

Gemäß einer weiteren Ausführungsform erfasst die dritte Erfassungseinheit 22 Passagierinformation aller für einen Flug eingecheckten Passagiere. Anschließend wird diese Passagierinformation in der dritten Erfassungseinheit 22 verarbeitet. So kann die Verarbeitung ergeben, dass für den Flug hauptsächlich russische Passagiere eingecheckt sind. Zusätzlich erhält die dritte Erfassungseinheit 22 von der zweiten Erfassungseinheit 20 die Information, dass der Flug von Sankt Petersburg nach New York geht. Entsprechend sendet die dritte Erfassungseinheit 22 der Steuerungseinheit 16 Steuerungsdaten, welche die Anzeigeeinheit 18 veranlassen, die schriftliche Information mit einem langen Zeitintervall in russischer Sprache und mit einem kürzeren Zeitintervall in englischer Sprache anzuzeigen.

Zur Bereitstellung der schriftlichen Information in verschiedenen Sprachen kann eine der Einheiten 12, 14, 16, 18, 20 oder 22 ein datenbankbasiertes Übersetzungsmodul (nicht gezeigt) aufweisen, das automatisch eine schriftliche Information 26 von einer ersten Sprache in eine zweite Sprache übersetzt. Erfasst beispielsweise eine der zweiten oder dritten Erfassungseinheit 20, 22, dass schriftliche Information 26 in deutscher und englischer Sprache angezeigt werden soll, wobei die schriftliche Information 26 nur in deutscher Sprache vorliegt, so übersetzt das Übersetzungsmodul die schriftliche Information 26 ins Englische, so dass diese abwechselnd in deutscher und in englischer Sprache angezeigt wird.

Ferner kann an dem Modul 24 bzw. der Anzeigeeinheit 18 eine Taste (nicht gezeigt) angebracht sein, die eine Änderung eines Anzeigebetriebsmodus ermöglicht. Beispielsweise kann bei Betätigung der Taste von einem alternierenden Sprachmodus in einem singuläreren Sprachmodus gewechselt werden.

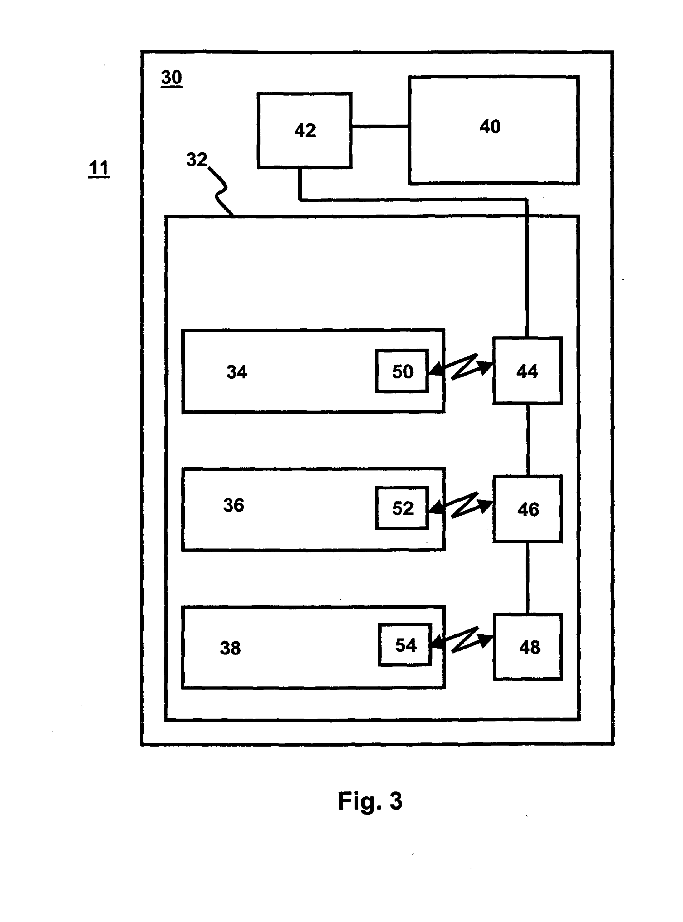

Unter Bezugnahme auf die Figuren 3 bis 5 wird nachfolgend eine Verwendung eines Systems zum Anzeigen von Information auf einer elektrischen Anzeigeeinheit in einem Trolley 30 in einer Flugzeugkabine 11 veranschaulicht. Bei dem System kann es sich um das in den Figuren 1 und 2 gezeigte System 10 oder ein anderes System handeln.

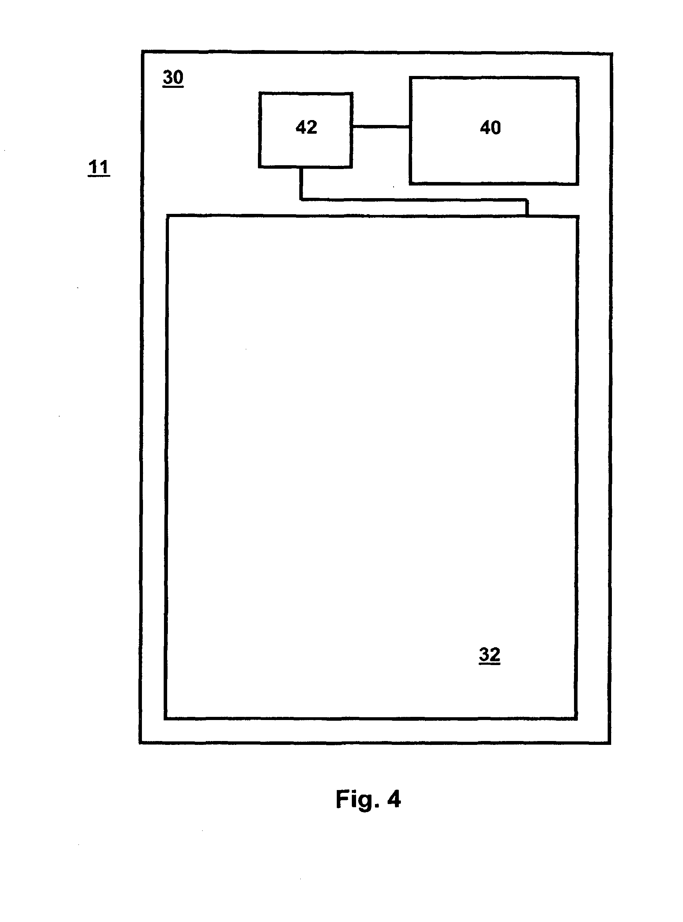

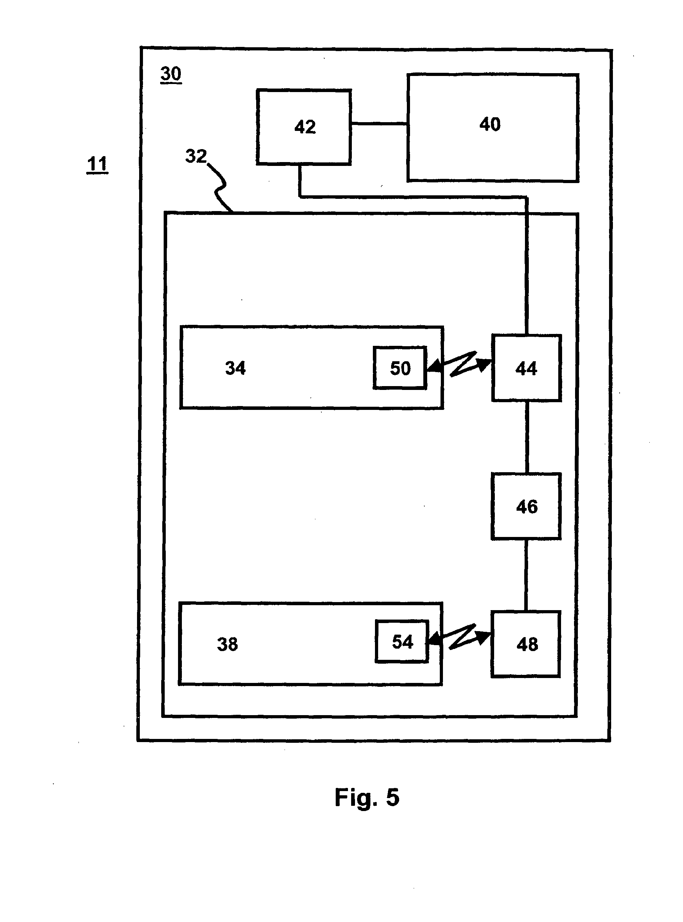

Der in den Figuren 3 bis 5 schematisch gezeigte Trolley 30 umfasst eine Tür 32, wobei die Figuren 3 und 5 den Trolley bei geöffneter Tür 32 und die Figur 4 den Trolley 30 bei geschlossener Tür 32 zeigen. Der Trolley 30 umfasst eine Mehrzahl von Aufnahmevorrichtung 34, 36 und 38. Bei den Aufnahmevorrichtungen 34, 36 und 38 handelt es sich um in Fächer einschieb- bzw. herausziehbare Aufnahmevorrichtungen, die dazu eingerichtet sind, Nahrungsmittel aufzunehmen. Insbesondere können die von den Aufnahmevorrichtungen 34, 36 und 38 aufgenommene Nahrungsmittel in dem Trolley 30 erwärmt und/oder gekühlt werden.

Das in dem Trolley 30 integrierte System zum Anzeigen von schriftlicher Information umfast eine Anzeigeeinheit 40, eine Steuerungseinheit 42 zum Ansteuern der Anzeigeeinheit 40, drei Lesegeräte 44, 46, 48 und drei RFID-Transponder 50, 52, 54. An jeder der Aufnahmevorrichtungen 34, 36 und 38 ist ein RFID-Transponder 50, 52, 54 angebracht. Entsprechend der Anzahl von Aufnahmevorrichtungen 34, 36 und 38 bzw. RFID-Transpondern 50, 52, 55 weist das System jeweilige Lesegeräte 44, 46, 48 auf. Die Lesegeräte 44, 46, 48 erfassen, ob sich die Aufnahmevorrichtungen 34, 36, 38 mit den RFID-Transpondern 50, 52, 54 in den jeweiligen Fächern befinden. Die RFID-Transponder 50, 52, 54 können den Lesegeräten 44, 46, 48 ferner Information hinsichtlich der auf den Aufnahmevorrichtungen 34, 36, 38 befindlichen Nahrungsmittel übermitteln. Von den Lesegeräten 44, 46, 48 erfasste Signale werden an die Steuerungseinheit 42 weitergeleitet, welche basierend auf den erfassten Signalen die Anzeigeeinheit 40 steuert.

Bezugnehmend auf die Figuren 1 bis 5 kann die Anzeigeeinheit 40 der Anzeigeeinheit 18, die Steuerungseinheit 42 der Steuerungseinheit 16, jede der Erfassungseinheiten 44, 46, 48 dem WLAN-Empfänger 14, und jeder der RFID-Transponder 50, 52, 54 dem WLAN-Sender 12 entsprechen. Aus diesem Grund wird auf eine detaillierte Beschreibung der in dem Trolley 30 integrierten Einheiten 40, 42, 44, 46, 48, 50, 52 und 54 des Systems zum Anzeigen von Information verzichtet.

Die Figur 4 zeigt den Zustand des Trolleys 30 bei geschlossener Tür 32. Zur besseren Isolation und kostengünstigen Bauweise ist in der Tür 32 kein Sichtfenster vorgesehen. In diesem Zustand kann ein Flugbegleiter nicht erkennen, welche Aufnahmevorrichtungen 34, 36, 38 sich in dem Trolley 30 befinden bzw. mit welchen Nahrungsmitteln die Aufnahmevorrichtungen 34, 36, 38 beladen sind. Wie aus der Figur 3 ersichtlich ist, wird entsprechende Information der RFID-Transponder 50, 52, 54 von den Lesegeräten 44, 46, 48 gelesen und an die Steuerungseinheit 42 weitergeleitet. Die Anzeigeeinheit 40 kann anschließend dem Beladungszustand des Trolleys 30 entsprechende schriftliche Information auf der Anzeigeeinheit 40 anzeigen. So kann die Anzeigevorrichtung 40 beispielsweise anzeigen, welche Aufnahmevorrichtungen 34, 36, 38 sich in dem Trolley 30 befinden, und/oder dass sich auf der Aufnahmevorrichtung 34 Fischgerichte, auf der Aufnahmevorrichtung 36 Fleischgerichte und auf der Aufnahmevorrichtung 38 Nachtische befinden.

Wie in der Ausführungsform der Figuren 1 und 2 kann diese Information abwechselnd in verschiedenen Sprachen auf der Anzeigeeinheit 40 angezeigt werden. So kann entsprechend der Ausführungsform der Figuren 1 und 2 Passagier- bzw. Abflug- und/oder Ankunftsortinformation an die Lesegeräte 44, 46, 48 übertragen werden, so dass die Anzeigeeinheit 40 die Information in den entsprechenden Sprachen anzeigt. Beispielsweise kann die Anzeigeeinheit 40 die Anzeige Fischgerichte, Fleischgerichte und Nachtische abwechselnd (insbesondere mit verschiedenen Zeitintervallen abwechseln) in englischer und chinesischer Sprache anzeigen.

Wird, wie in der Figur 5 gezeigt, die Aufnahmevorrichtung 36 mit den Fleischgerichten aus dem Trolley 30 entnommen, so erkennt das Lesegerät 46, dass sich der RFID Transponder 52 nicht mehr in seiner Nähe befindet. Entsprechend zeigt die Anzeigeeinheit 40 in dem in Figur 4 gezeigten geschlossenen Zustand des Trolleys 30 an, dass sich in dem Trolley 30 nur noch die Aufnahmevorrichtung 34 mit den Fischgerichten und die Aufnahmevorrichtung 38 mit den Nachtischen befinden. Aus diesem Grund hat der Flugbegleiter immer einen Überblick in Echtzeit, welche Aufnahmevorrichtungen 34, 36, 38 bzw. Nahrungsmittel sich in dem Trolley 30 befinden. Ein Öffnen der Tür 30 zur Kontrolle kann somit vermieden werden. Dies ist von besonderem Vorteil, wenn der Trolley 30 neben einem Transport von Nahrungsmitteln zum Erwärmen bzw. Kühlen der Nahrungsmittel eingesetzt wird. In diesem Fall besteht ein Interesse, die Zeitdauer des Öffnens der Tür 32 gering zu halten, so dass ein Entweichen von Wärme bzw. Kälte in den Flugzeugkabineninnenraum 11 vermieden wird.

## Patentansprüche

1. Verfahren zum Anzeigen von Information (26) auf einer elektrischen Anzeigeeinheit (18; 40) in einer Flugzeugkabine (11), aufweisend
- Erzeugen mindestens eines die Information eindeutig identifizierenden Signals,
- Erfassen, insbesondere drahtloses Erfassen, des mindestens einen Signals,
- Steuern der Anzeigeeinheit (18; 40) basierend auf dem mindestens einen Signal und
- Anzeigen der Information auf der elektrischen Anzeigeeinheit (18; 40), **gekennzeichnet durch**
- Erfassen von Abflug- und/oder Ankunftsortinformation eines Flugs und
- Anzeigen der schriftlichen Information in Abhängigkeit von der erfassten Abflug-und/oder Ankunftsortinformation in verschiedenen Sprachen.

2. Verfahren nach Anspruch 1, wobei die Information (26) schriftliche Information ist und das Anzeigen auf der Anzeigeeinheit (18; 40) aufweist
- Anzeigen der schriftlichen Information in verschiedenen Sprachen, insbesondere zwischen verschiedenen Sprachen alternierend.

3. Verfahren nach Anspruch 2, ferner aufweisend
- Erfassen von Passagierinformation und
- Anzeigen der schriftlichen Information in Abhängigkeit von der erfassten Passagierinformation in verschiedenen Sprachen.

4. Verfahren nach Anspruch 3, wobei die Anzeigeeinheit an einem Passagiersitz angebracht ist und die schriftlichen Information in Abhängigkeit von der erfassten Passagierinformation eines dem Passagiersitz zugeordneten Passagiers in verschiedenen Sprachen angezeigt wird.

5. Verfahren nach einem der Ansprüche 3 oder 4, ferner aufweisend
- Steuern einer Anzeigezeitdauer der schriftlichen Information in der jeweiligen Sprache in Abhängigkeit von der erfassten Information.

6. Verfahren nach Anspruch 1, ferner aufweisend
- Erzeugen des mindestens einen die Information eindeutig identifizierenden Signals durch einen Transponder (50, 52, 54), der an einer Aufnahmevorrichtung (34, 36, 38) in einem Transportbehälter (30) angebracht ist,
- drahtloses Erfassen des mindestens einen Signals durch ein Lesegerät (44, 46, 48), das in dem Transportbehälter (30) angebracht ist und
- Anzeigen der Information auf der Anzeigeeinheit (40), die außen an dem Transportbehälter (30) angebracht ist.

7. System (10) zum Anzeigen von Information auf einer elektrischen Anzeigeeinheit (18; 40) in einer Flugzeugkabine (11), aufweisend
- eine elektrische Anzeigeeinheit (18; 40), die dazu eingerichtet ist, die Information anzuzeigen,
- eine Erzeugungseinheit (12; 50, 52, 54), die dazu eingerichtet ist, mindestens ein die Information eindeutig identifizierendes Signal zu erzeugen,
- eine erste Erfassungseinheit (14; 44, 46, 48), die dazu eingerichtet ist, das mindestens eine Signal zu erfassen, insbesondere drahtlos, und
- eine Steuerungseinheit (16; 42) die dazu eingerichtet ist, die Anzeigeeinheit (18; 40) basierend auf dem mindestens einen Signal zu steuern,
**gekennzeichnet durch**
- eine zweite Erfassungseinheit (20) zum Erfassen von Abflug- und/oder Ankunftsortinformation eines Flugs, wobei
- die zweite Erfassungseinheit (20) dazu eingerichtet ist, in Abhängigkeit von der erfassten Abflug- und/oder Ankunftsortinformation das mindestens eine die schriftliche Information in verschiedenen Sprachen eindeutig identifizierende Signal zu erzeugen.

8. System nach Anspruch 7, wobei die Steuerungseinheit (16; 42) dazu eingerichtet ist, die Anzeigeeinheit (18; 40) derart zu steuern, dass diese schriftliche Information in verschiedenen Sprachen, insbesondere zwischen verschiedenen Sprachen alternierend, anzeigt.

9. System nach Anspruch 8, ferner aufweisend eine dritte Erfassungseinheit (22) zum Erfassen von Passagierinformation, wobei die dritte Erfassungseinheit (24) dazu eingerichtet ist, in Abhängigkeit von der erfassten Passagierinformation das mindestens eine die schriftliche Information in verschiedenen Sprachen eindeutig identifizierende Signal zu erzeugen.

10. System nach Anspruch 9, wobei die Anzeigeeinheit (18) an einem Passagiersitz angebracht ist und die erfasste Passagierinformation eine Zuordnung zwischen einem Passagiersitz und einer Passagiernationalität oder Passagiersprache umfasst.

11. System nach einem der Ansprüche 9 oder 10, wobei die Erzeugungseinheit (12; 50, 52, 54) dazu eingerichtet ist, in Abhängigkeit von der erfassten Information ein Zeitsteuerungssignal zu erzeugen, welches eine Anzeigezeitdauer der schriftlichen Information in der jeweiligen Sprache auf der Anzeigeeinheit (18; 40) umfasst.

12. System nach Anspruch 7, ferner aufweisend einen Transportbehälter (30) mit mindestens einer Aufnahmevorrichtung (34, 36, 38), wobei die Erzeugungseinheit (12; 50, 52, 54) ein Transponder ist, der an der Aufnahmevorrichtung (34, 36, 38) in dem Transportbehälter (30) angebracht ist, die erste Erfassungseinheit (44, 46, 48) ein Lesegerät ist, das in dem Transportbehälter (30) angebracht ist und das mindestens eine Signal drahtlos erfasst, und die Anzeigeeinheit (40) außen an dem Transportbehälter (30) angebracht ist.

13. System nach einem der Ansprüche 7 bis 12, wobei die Anzeigeeinheit (18; 40) ein OLED Anzeige ist.

## Claims

1. Method for displaying information (26) on an electrical display unit (18; 40) in an aircraft cabin (11), comprising
- generating at least one signal unambiguously identifying the information,
- acquiring, in particular wireless acquiring, of the at least one signal,
- controlling the display unit (18; 40) on the basis of the at least one signal and
- displaying the information on the electrical display unit (18; 40),
**characterized by**
- acquiring of departure and/or arrival location information of a flight and
- displaying the written information depending on the departure and/or arrival location information acquired in different languages.

2. Method according to claim 1, wherein the information (26) is written information and the display on the display unit (18; 40) comprises
- displaying the written information in different languages, in particular alternating between different languages.

3. Method according to claim 2, further comprising
- acquiring of passenger information and
- displaying the written information in different languages depending on the acquired passenger information.

4. Method according to claim 3, wherein the display unit is mounted on a passenger seat and the written information is displayed in different languages depending on the acquired passenger information of a passenger assigned to the passenger seat.

5. Method according to one of claims 3 or 4, further comprising
- controlling of a display duration of the written information in the respective language depending on the acquired information.

6. Method according to claim 1, further comprising
- generating the at least one signal unambiguously identifying the information by a transponder (50, 52, 54), which is fitted to a holding device (34, 36, 38) in a transport container (30),
- wireless acquiring the at least one signal by a reader (44, 46, 48), which is fitted in the transport container (30) and
- displaying the information on the display unit (40), which is mounted on the outside of the transport container (30).

7. System (10) for displaying information on an electrical display unit (18; 40) in an aircraft cabin (11), comprising
- an electrical display unit (18; 40), which is adapted to display the information,
- a generating unit (12; 50, 52, 54), which is adapted to generate at least one signal unambiguously identifying the information,
- a first acquiring unit (14; 44, 46, 48), which is adapted to acquire the at least one signal, in particular wirelessly, and
- a control unit (16; 42), which is adapted to control the display unit (18; 40) on the basis of the at least one signal,
**characterised by**
- a second acquiring unit (20) for acquiring departure and/or arrival location information of a flight, wherein
- the second acquiring unit (20) is adapted to generate the at least one signal unambiguously identifying the written information in different languages depending on the acquired departure and/or arrival location information.

8. System according to claim 7, wherein the control unit (16; 42) is adapted to control the display unit (18; 40) such that this displays written information in different languages, in particular alternating between different languages.

9. System according to claim 8, further comprising a third acquiring unit (22) for acquiring passenger information, wherein the third acquiring unit (22) is adapted to generate the at least one signal unambiguously identifying the written information in different languages depending on the acquired passenger information.

10. System according to claim 9, wherein the display unit (18) is mounted on a passenger seat and the acquired passenger information comprises a correlation between a passenger seat and a passenger nationality or passenger language.

11. System according to one of claims 9 or 10, wherein the generating unit (12; 50, 52, 54) is adapted to generate a time control signal depending on the acquired information, which signal comprises a display duration of the written information in the respective language on the display unit (18; 40).

12. System according to claim 7, further comprising a transport container (30) with at least one holding device (34, 36, 38), wherein the generating unit (12; 50, 52, 54) is a transponder, which is fitted to the holding device (34, 36, 38) in the transport container (30), the first acquiring unit (44, 46, 48) is a reader, which is fitted in the transport container (30) and acquires the at least one signal wirelessly, and the display unit (40) is mounted on the outside of the transport container (30).

13. System according to one of claims 7 to 12, wherein the display unit (18; 40) is an OLED display.

## Revendications

1. Procédé d'affichage d'une information (26) sur une unité d'affichage électrique (18 ; 40) dans une cabine d'avion (11), comprenant :
- la production d'au moins un signal identifiant clairement l'information,
- la détection, en particulier la détection sans fil, dudit signal,
- la commande de l'unité d'affichage (18 ; 40) sur la base dudit signal et
- l'affichage de l'information sur l'unité d'affichage électrique (18 ; 40),
**caractérisé par**
- la détection d'une information d'arrivée et/ou de départ d'un vol et
- l'affichage en différentes langues de l'information écrite en fonction de l'information d'arrivée et/ou de départ détectée.

2. Procédé selon la revendication 1, dans le cadre duquel l'information (26) est une information écrite et l'affichage sur l'unité d'affichage (18 ; 40) comprend
- l'affichage en différentes langues de l'information écrite, en particulier en différentes langues qui alternent entre elles.

3. Procédé selon la revendication 2, comprenant en outre
- la détection d'une information pour passager et
- l'affichage en différentes langues de l'information écrite en fonction de l'information pour passager détectée.

4. Procédé selon la revendication 3, dans le cadre duquel l'unité d'affichage est placée sur un siège de passager et l'information écrite est affichée en différentes langues en fonction de l'information pour passager détectée pour un passager affecté au siège de passager.

5. Procédé selon l'une des revendications 3 ou 4, comprenant en outre
- la commande d'une durée d'affichage de l'information écrite dans la langue correspondante en fonction de l'information détectée.

6. Procédé selon la revendication 1, comprenant en outre
- la production d'au moins un signal identifiant clairement l'information par un transpondeur (50, 52, 54) qui est monté sur un dispositif de support (34, 36, 38) dans un conteneur de transport (30),
- la détection sans fil dudit signal par un lecteur (44, 46, 48) qui est monté dans le conteneur de transport (30) et
- l'affichage de l'information sur l'unité d'affichage (40) qui est montée à l'extérieur, sur le conteneur de transport (30).

7. Système d'affichage d'une information sur une unité d'affichage électrique (18 ; 40) dans une cabine d'avion (11), comprenant :
- une unité d'affichage électrique (18 ; 40) qui est conçue pour afficher l'information,
- une unité de production (12 ; 50, 52, 54) qui est conçue pour produire au moins un signal identifiant clairement l'information,
- une première unité de détection (14 ; 44, 46 48) qui est conçue pour détecter ledit signal, en particulier sans fil, et
- une unité de commande (16 ; 42) qui est conçue pour commander l'unité d'affichage (18 ; 40) sur la base dudit signal,
**caractérisé par**
- une deuxième unité de détection (20) destinée à la détection d'une information d'arrivée et/ou de départ d'un vol,
- cette deuxième unité de détection (20) étant conçue pour produire, en fonction de l'information d'arrivée et/ou de départ détectée, ledit signal identifiant clairement l'information écrite en différentes langues.

8. Système selon la revendication 7, dans le cadre duquel l'unité de commande (16 ; 42) est conçue pour commander l'unité d'affichage (18 ; 40) de telle sorte que celle-ci affiche une information écrite en différentes langues, en particulier en différentes langues qui alternent entre elles.

9. Système selon la revendication 8, comprenant en outre une troisième unité de détection (22) pour la détection d'une information pour passager, cette troisième unité de détection (22) étant conçue pour produire, en fonction de l'information pour passager détectée, ledit signal identifiant clairement l'information écrite en différentes langues.

10. Système selon la revendication 9, dans le cadre duquel l'unité d'affichage (18) est montée sur un siège de passager et l'information pour passager détectée contient une affectation entre un siège de passager et une nationalité de passager ou une langue de passager.

11. Système selon l'une des revendications 9 ou 10, dans le cadre duquel l'unité de production (12 ; 50 52, 54) est conçue pour produire, en fonction de l'information détectée, un signal de temporisation qui comprend une durée d'affichage de l'information écrite dans la langue correspondante sur l'unité d'affichage (18 ; 40).

12. Système selon la revendication 7, comprenant en outre un conteneur de transport (30) muni d'au moins un dispositif de support (34, 36, 38), l'unité de production (12 ; 50, 52, 54) étant un transpondeur qui est monté sur le dispositif de support (34, 36, 38) dans le conteneur de transport (30), la première unité de détection (44, 46, 48) étant un lecteur qui est monté dans le conteneur de transport (30) et détecte sans fil ledit signal, et l'unité d'affichage (40) étant montée, à l'extérieur, sur le conteneur de transport (30).

13. Système selon l'une des revendications 7 à 12, dans le cadre duquel l'unité d'affichage (18 ; 40) est un affichage OLED.
